# EUROPEAN PATENT SPECIFICATION

(11) **EP 3 488 709 B1**
(45) Date of publication and mention of the grant of the patent: **24.05.2023**
(21) Application number: 17830642.9
(22) Date of filing: 10.03.2017
(51) Int. Cl.: A23L 5/00, A23L 33/16, C07C 55/22, C07C 51/41, A23L 33/21

(54) **FOOD PRODUCT CONTAINING CALCIUM SALT GRANULES AND DIETARY FIBER**
LEBENSMITTELPRODUKT MIT CALCIUMSALZGRANULAT UND BALLASTSTOFFEN
PRODUIT ALIMENTAIRE CONTENANT DES GRANULES DE SEL DE CALCIUM ET FIBRES ALIMENTAIRES

(30) Priority: 22.07.2016 JP 2016144870; 18.11.2016 JP 2016225574
(43) Date of publication of application: 29.05.2019
(73) Proprietor: Unical, Kawasaki-shi, Kanagawa 215-0001 (JP)
(72) Inventor: NISHIMURA, Masahiko, Kawasaki-shi Kanagawa 215-0001 (JP)
(74) Representative: Uexküll & Stolberg
(86) International application number: PCT/JP2017/009838
(87) International publication number: WO 2018/016120

(56) References cited:
- JP-A- H0 567
- JP-A- H0 947 253
- JP-A- H08 103 246
- JP-A- 2005 073 695
- DR. MIRIAM MÜNCHBACH AND DR. GERHARD GERSTNER: "Calcium Fortification in Dairy Products", FOOD MARKETING & TECHNOLOGY ?, 1 February 2010 (2010-02-01), pages 4-8, XP055256272,
- Parveez Ahmad Para ET AL: "Fortification of Dairy Products: A Review", World Journal of Biology and Medical Sciences, 1 March 2016 (2016-03-01), pages 1-35, XP055653437, Retrieved from the Internet: URL:https://www.researchgate.net/profile/S ubha_Ganguly/publication/289626175_Fortifi cation_of_Dairy_Products_A_Review/links/56 90b6b808aed0aed8110358/Fortification-of-Da iry-Products-A-Review.pdf [retrieved on 2019-12-17]

## Description

### [Technical Field]

The present invention relates to the use a composition comprising granules of secondary particles in combination with a food product comprising dietary fiber, wherein the granules of said secondary particles comprise cyclodextrin and primary particles of a calcium salt.

### [Background Art]

Calcium is contained in dairy products, as well as sea weeds, small fish, sesame, and the like, from which humans take in calcium. However, calcium intake tends to be insufficient from food alone due to difficulties in absorption thereof into the body and the like. For this reason, research and development are ongoing for calcium compounds with an enhanced absorption rate into the body and food products containing the same.

The inventors have reported in Patent Literature 1 that a calcium compound obtained by calcining the outer shell of sea urchins is absorbed well into the body and has excellent taste and flavor upon intake.
Patent Literature 1: Japanese Patent No. 2660906

### [Summary of Invention]

### [Technical Problem]

While dietary fiber is an indigestible component in food products which is not digested by human digestive enzymes, dietary fiber intake has various effects in the maintenance of health. Examples of such effects include reduced risk of colon cancer, suppression of an increase in post-meal blood sugar levels, reduction in blood cholesterol concentration, and the like.

However, dietary fiber is known to have an effect of inhibiting calcium absorption from the intestinal tract. It is therefore desirable to avoid simultaneous ingestion of calcium and dietary fiber for efficient calcium absorption into the body, but this is burdensome for consumers who wish to efficiently supplement such minerals and components. The publication of Dr. Miriam Münchbach and Dr. Gerhard Gerstner: "Calcium Fortification in Dairy Products", Food Marketing & Technology, 1 February 2010, p 4-8 discusses micronized calcium citrate, including its dispersibility due to the micronized format and the size options for the crystals. Parveez Ahmad Para et al: "Fortification of Dairy Products: A Review", World Journal of Biology and Medical Sciences, 1 March 2016, p 1-35 discusses the fortification with calcium citrate and fibers in the context of yogurt.

### [Solution to Problem]

The first embodiment of the present invention provides the use of a composition comprising granules of secondary particles in combination with a food product comprising dietary fiber, wherein the granules of said secondary particles comprise cyclodextrin and flat primary particles of calcium salt with a mean length of 2 um or less in a planar direction, wherein the calcium salt comprises calcium citrate.

### [Brief Description of Drawings]

[Figure 1] Figure **1** is a schematic diagram showing primary and secondary particles of calcium citrate.
[Figure 2] Figure **2** is a schematic diagram showing an example of a processing flow in a manufacturing method for micronizing calcium salt.
[Figure 3] Figure **3** is an electron microscope picture of micronized calcium citrate powder that has been magnified 400-fold.
[Figure 4] Figure **4** is an electron microscope picture of micronized calcium citrate powder that has been magnified 5000-fold.
[Figure 5] Figure **5** is a diagram depicting the body weight of a group of rats used in a calcium absorption test prior to starting the test. In Figures **5** to **10****,** the columns and bars indicate the mean value and standard deviation, respectively.
[Figure 6] Figure **6** is a diagram depicting the body weight of a group of rats used in a calcium absorption test after the completion of the test.
[Figure 7] Figure **7** is a diagram depicting the total feed intake of a group of rats used in a calcium absorption test during the test period.
[Figure 8] Figure **8** is a diagram depicting the feed efficiency calculated based on the total feed intake and the increase in body weight during the test period of a group of rats used in a calcium absorption test.
[Figure 9] Figure **9** is a diagram depicting the calcium absorption rate of a group of rats used in a calcium absorption test prior to starting the test.
[Figure 10] Figure **10** is a diagram depicting the calcium absorption rate in the late stage of the test period when calcium carbonate or micronized calcium citrate is simultaneously fed with cellulose or barley grass (baseline amount and double the amount thereof). The asterisks indicate that the difference between the two values is statistically significant.
[Figure 11] Figure **11** is a diagram depicting the change in the calcium absorption rate in the intermediate and late stages of the test period when calcium carbonate or micronized calcium citrate is simultaneously fed with the baseline amount of barley grass. In Figures **11** to **14****,** each plot indicates the mean value.
[Figure 12] Figure **12** is a diagram depicting the change in the calcium absorption rate in the intermediate and late stages of the test period when calcium carbonate or micronized calcium citrate is simultaneously fed with a double amount of barley grass.
[Figure 13] Figure **13** is a diagram depicting the change in the calcium absorption rate in the intermediate and late stages of the test period when calcium carbonate or micronized calcium citrate is simultaneously fed with cellulose.
[Figure 14] Figure **14** is a diagram depicting the calcium absorption rate in the late stage of the test period when calcium carbonate or micronized calcium citrate is simultaneously fed with cellulose or barley grass (baseline amount and double the amount thereof) by a graph that is a different type from Figure **10****.**

(General disclosure) In a food product comprising granules of calcium salt and dietary fiber, the granules of calcium salt can have a mean particle size of 50 µm or less, and flat primary particles of calcium salt with a mean length of 2 um or less in a planar direction can aggregate and secondary particles with a mean particle size of 50 um or less can be formed. In a food product comprising granules of calcium salt and dietary fiber, the calcium salt comprising calcium citrate and cyclodextrin as a binder for forming a secondary particle. In a food product comprising granules of calcium salt and dietary fiber, the dietary fiber can comprise dietary fiber derived from a Poaceae, Asteraceae, Lamiaceae, Brassicaceae, Theaceae, Amaranthaceae, Liliaceae, or Tiliaceae plant, or can be dietary fiber from dried and powderized barley grass.

### [Description of Embodiments]

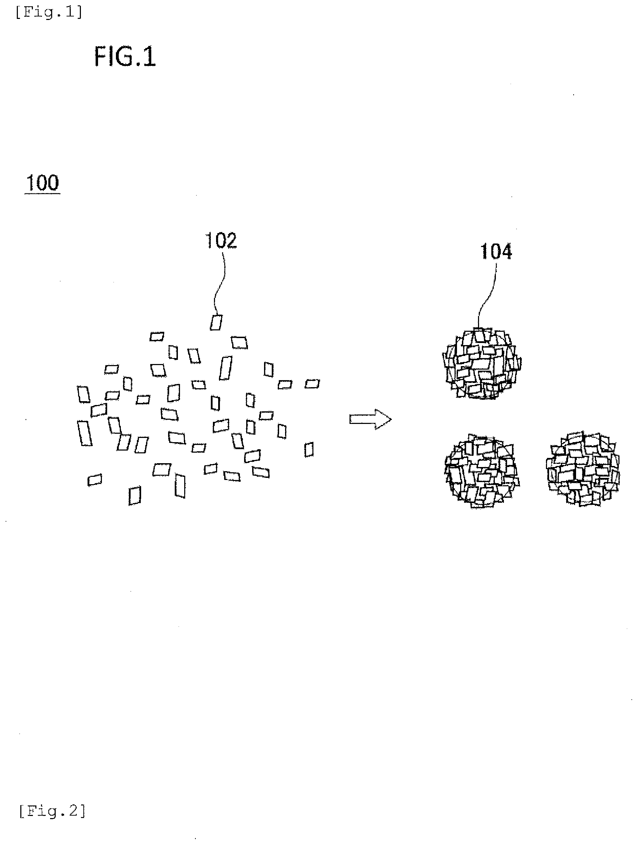

Figure **1** is a schematic diagram showing calcium citrate particles **100.** Calcium citrate is a calcium salt of organic carboxylic acid, which is the calcium salt of the best mode of the invention. When calcium citrate is used, a nucleus of a crystal thereof is formed and then grows to initially form a slurry of primary particles **102** consisting of planar and tabular crystals. This slurry of primary particles is spray dried, whereby the primary particles aggregate to form secondary particles **104,** resulting in granules.

The inventor was able to further micronize crystals that become primary particles of calcium salt by using a manufacturing method in a non-homogeneous system of gradually adding an aqueous carboxylic acid solution to a violently agitated slurry of slaked lime instead of depending on a conventional method in a homogenous solution system of gradually adding a slurry of slaked lime to an aqueous carboxylic acid solution. Furthermore, the present invention has been completed by finding that a calcium salt consisting of micronized crystal reduces the action of dietary fiber to inhibit the absorption of calcium into the body.

A micronized calcium salt in view of this embodiment can suppress the absorption inhibiting action of simultaneously ingested dietary fiber to enhance the absorption rate of calcium into the body. Thus, a food product containing both calcium and dietary fiber with a high calcium absorption rate can be provided to consumers. It is also not necessary to avoid simultaneous ingestion of calcium and dietary fiber due to concerns for reduced absorption rate into the body, so that convenience of consumers of said food product can be improved. This embodiment can also provide livestock feed containing dietary fiber with an excellent calcium absorption property.

The reason why micronizing crystals of calcium salt attains the above effect in the body is not clear, and the present invention is not bound by any theory. However, it is presumed that there is some type of mechanism by which micronized crystals promote elution of calcium in the body, which allows adsorption to dietary fiber or the like to be avoided and thus enhance the ratio of calcium absorbed by enteral cells.

Figure 2 is a schematic diagram showing an example of a method S200 of manufacturing granules of micronized calcium salt according to this embodiment. The manufacturing method of a micronized calcium salt primarily has a slaked lime slurrying stage **S202,** an aqueous carboxylic acid solution adding stage **S206,** and spray drying stage **S216.** The method preferably comprises a dispersant adding stage **S204** for micronization of carboxylic acid crystals. The method can comprise an auxiliary raw material adding stage **S208,** primarily for adding chondroitin sulfate, in order to facilitate absorption of calcium salt. A pH adjusting stage **S210** can be further added to provide excellent flavor and mouthfeel to a beverage or food product containing the calcium salt. It is preferably that the method comprises a concentration adjusting stage **S212** to adjust the viscosity in order to optimize the granule size generated from the spray drying stage **S216.** The method can also comprise a wet milling stage **S214** for stabilizing the quality of a calcium salt composition by further homogenizing the primary particle size.

The best embodiment, i.e., calcium citrate, comprises cyclodextrin as a dispersant. Chondroitin sulfate is added as an auxiliary raw material to further enhance the absorbability. Each raw material is explained hereinafter in more detail.

Various carboxylic acids such as malic acid are used in this embodiment, but citric acid is especially preferable. Calcium citrate, which is a substance produced by chelating citric acid to calcium, is extensively used as a food additive primarily for the purpose of adding calcium to food products.

The inventors have also found that micronization of primary particles upon synthesis of calcium citrate not only suppress the effect of inhibiting absorption by dietary fiber, but also significantly improves the water dispersability of calcium citrate and makes it less likely to precipitate in an aqueous solution. The planar size of primary particles is desirably 2 µm or less, and more desirably 1 µm or less, to improve water dispersability of calcium citrate. The particle size of granules of secondary particles is preferably 50 µm or less.

A dispersant is generally used to disperse water insoluble or hardly soluble microparticles in water. According to the invention, cyclodextrin is used as a dispersant. Cyclodextrin is one type of cyclic oligosaccharide in which multiple glucose molecules are bound by a glucosidic bond to form a cyclic structure. Well-known examples thereof include α-cyclodextrin in which 6 glucose molecules are bound, β-cyclodextrin in which 7 glucose molecules are bound, γ-cyclodextrin in which 8 glucose molecules are bound, and the like.

If cyclodextrin is added to the calcium citrate of this embodiment prior to adding an aqueous citric acid solution, primary particles can be further micronized. It is understood that after formation of a nucleus of a crystal of calcium citrate, cyclodextrin that is a cyclic compound interposed in the surroundings provides a steric hindrance in the crystal growth process to suppress the crystallization rate to materialize the micronization.

Cyclodextrin can also prevent aggregation of calcium citrate in wet milling. Cyclodextrin also serves the role of a binder when primary particles of calcium salt aggregates to form secondary particles. In other words, cyclodextrin is dissolved when granules of calcium salt are added to water, which can promote the disintegration of secondary particles due to the loss of a binder to assist in dispersing primary particles in water.

In this embodiment, the cyclodextrin is preferably added at 5 parts by weight to 20 parts by weight to 100 parts by weight of calcium salt solid, i.e., 5 to 20% by weight ratio. If the amount added is less than 5%, the planar size of primary particles of calcium citrate would be greater than 2 µm, and calcium salt granules would not be formed after spray drying, resulting in granules with irregular shapes. When undergoing the wet milling step, the effect of preventing aggregation of calcium citrate during wet milling is weak if the amount added is less than 5%, such that wet milling cannot be performed. On the other hand, the effect of preventing aggregation does not change by adding cyclodextrin at an amount greater than 20%, but the viscosity of water increases due to the addition, resulting in a negative effect of increase in the force required for wet milling. Cyclodextrin is also expensive, so that the manufacturing cost increases.

In this embodiment, an auxiliary raw material can be added. It is preferable to use chondroitin sulfate in particular as an auxiliary raw material. Chondroitin sulfate is a type of mucopolysaccharide found in the body of animals. Chondroitin sulfate is a mucopolysaccharide wherein a sulfuric acid is ester bonded to a repeating disaccharide unit to which D-glucuronic acid is β-glycosidically bound. Chondroitin sulfate is preferably added at an amount of 0.2 to 5% and preferably 0.3 to 2.5% by weight ratio to the calcium component of calcium citrate for significantly improving the absorbability of calcium into the body.

Commercially available quick lime used for the manufacture of a slurry of slaked lime can be directly used in this embodiment if the quick lime is free of inorganic matter such as metal that is toxic to the human body. However, the calcium salt of the invention is ingested into the human body, so that quick lime obtained by calcining, for example, a scallop shell, outer shell of sea urchins, egg shell, or the like is preferred as a natural calcium source. Since these calcium sources are generally disposed as industrial waste, they can be readily obtained cost-effectively.

Hereinafter, the manufacturing method of granules of calcium salt and the generation of the granules are explained by each stage shown in Figure **2****.** An example of an especially optimal carboxylic acid salt of the invention is explained based on calcium citrate containing cyclodextrin and chondroitin sulfate, but the examples does not limit the effective scope of the present invention with respect to any point.

The slaked lime slurrying stage **S202** refers to a stage of generating a slurry of slaked lime (Ca(OH)₂) by mixing quick lime (CaO) with water. The blending ratio of quick lime and water is preferably 95 to 80 parts water to 5 to 20 parts quick lime by weight ratio, and more preferably a mix of 5 to 10 parts by weight of quick lime to 95 to 90 parts by weight of water.

In order to perform slurrying of slaked lime more efficiently, the raw material quick lime can be micronized by utilizing dry milling or the like. In other words, micronization of quick lime can reduce the reaction time when reacting with water. Micronization of quick lime can also reduce the reaction time of citric acid and slaked lime discussed below. If a high quality slaked lime is commercially available, this can be used as the raw material.

The dispersant adding stage **S204** is desirable to attain micronization of primary particles of calcium citrate. While cyclodextrin can be added as powder in adding a dispersant, addition thereof while dissolved in water is preferred because cyclodextrin can be diffused homogenously in the slurry. Since cyclodextrin also functions as a water soluble binder, the bond between calcium citrate and a binder is released in water, such that primary particles of calcium citrate can be dispersed in a liquid.

The aqueous carboxylic acid solution adding stage **S206** refers to a stage of dripping in an aqueous citric acid solution into a violently agitated slurry of slaked lime in a reaction vessel to synthesize calcium citrate. It is preferable to drip an aqueous citric acid solution directly above an impeller of an agitator because smaller citric acid crystals are generated. Since violent agitation can produce smaller citric acid crystals, the tangential velocity of an agitator impeller is preferably 10 m/s or greater.

The auxiliary raw material adding stage **S208** refers to a stage of adding an auxiliary raw material to calcium citrate obtained by adding an aqueous citric acid solution. It is preferable to add chondroitin sulfate in order to increase calcium absorption into the body. The amount of chondroitin sulfate added is 0.2 to 5% and preferably 0.3 to 2.5% by weight ratio to calcium component of calcium citrate in a reaction solution. This stage can provide a calcium salt in water dispersed state with excellent calcium absorption property into the body.

The pH adjusting stage **S210** refers to a stage of adjusting the pH of calcium citrate. While not essential for micronizing a calcium salt, pH adjustment can prevent impairment of flavor or taste of a food product or beverage to which a calcium salt composition is added. A slurry of slaked lime and citric acid can be completely reacted by adjusting the pH of a reaction solution to weak acidic. Thus, such a stage of adjusting the pH is preferably included. Citric acid, which is the raw material, can be used as a pH adjusting agent. It is preferable to add citric acid so that the pH of a reaction solution is about 5 to 5 and more preferably a pH of 5.6.

The concentration adjusting stage **S212** refers to a stage of adjusting the concentration by adding purified water so that the concentration of the solid component of a slurry of calcium citrate would be 10 to 20% by weight. This can prevent excessive increase in viscosity and gelation of a slurry of calcium citrate during the wet milling stage or the spray drying stage described below.

The wet milling stage **S214** refers to a stage of performing wet milling on calcium citrate in a liquid. While primary particles of calcium citrate are sufficiently micronized by the above manufacturing process, the wet milling stage is preferred because inclusion thereof contributes to stabilization of the quality of calcium salt compositions. Specifically, a bulk material that has stuck to a reaction vessel or the like over time can contaminate a calcium salt solution, and this can be milled to maintain the homogeneity of the calcium salt composition. When a primary particle with a large size is randomly generated, this can be milled to manufacture a more homogeneous product. The wet milling method is not particularly limited, but for example an ultrafine media mill can be used.

The spray drying stage **S216** refers to a stage of spray drying and powderizing a calcium salt solution to manufacture readily dispersible calcium salt granules. If the viscosity of a calcium salt solution is optimally adjusted, liquid drops upon spraying can have a suitable size so that granules consisting of powder with a particle size of 100 µm or less can be obtained.

There are several forms of spray dryers such as disk atomizer, high pressure nozzle, and two fluid nozzle spray dryers depending on the method of spraying a liquid. The form used in spray drying is not particularly limited, so that a spray dryer of any form can be used, as long as particles with a maximum particle size of 100 µm or less can be economically obtained. When spray drying in a highly versatile disk atomizer form, many particles of 100 um or greater are generated which would require post-processing such as sieving, unless a high speed revolution model is used. Thus, it is preferable to use a two fluid nozzle resulting in more fine dry powder.

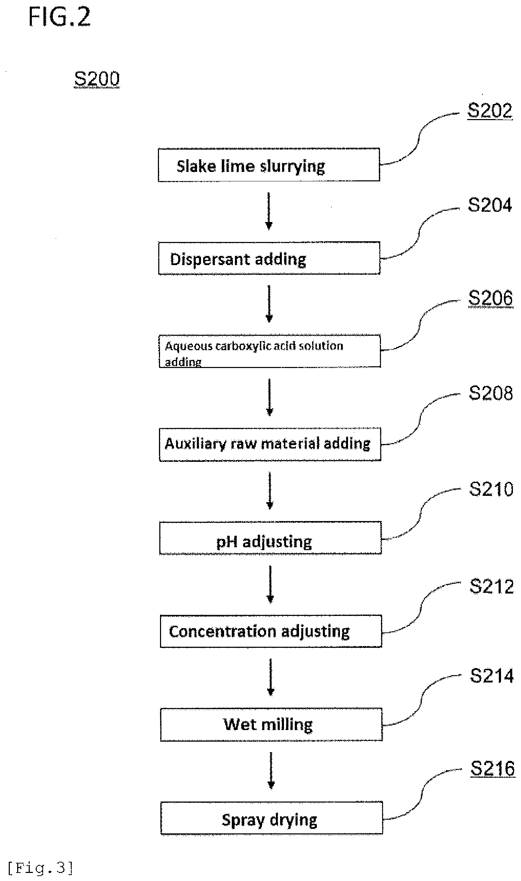

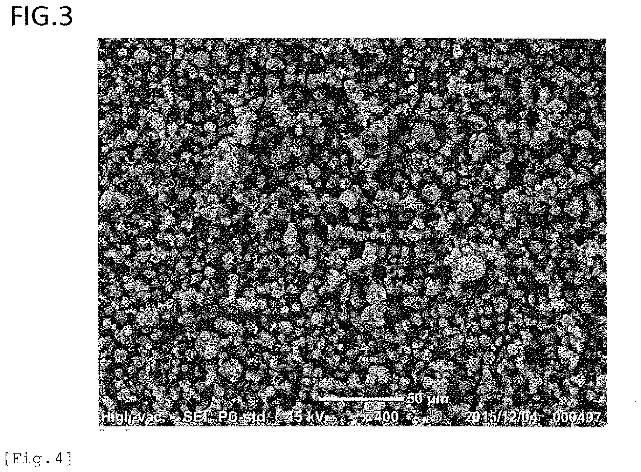

When powder of calcium citrate salt obtained by the manufacturing method of the above embodiment is observed using an electron microscope, it can be seen that flat primary particles of calcium salt with a mean length of 2 µm or less in a planar direction aggregate to form secondary particles with a mean particle size of 50 µm or less. It was inferred from the electron microscope observation that cyclodextrin added as a dispersant contributes to the formation of the secondary particles as a binder. Figures **3** and **4** are electron microscope pictures of such calcium salt powder expanded to 400 and 5000 times magnification, respectively.

This embodiment includes dietary fiber with calcium citrate consisting of the micronized crystals. Dietary fiber which is used as a raw material is explained hereinafter.

Dietary fiber is generally defined as "all indigestible components in food which is not digested by human digestive enzymes". In this embodiment, dietary fiber collectively refers to all edible dietary fibers. Dietary fiber is roughly categorized into water soluble and insoluble dietary fiber, but the embodiment is not limited to one type of dietary fiber.

Examples of the insoluble dietary fiber include cellulose consisting of polysaccharide, which is a primary component of plant cell walls, as well as hemicellulose and lignin that also constitute a plant matter, and chitin and chitosan that are exoskeleton components of shrimps, crabs and the like. Examples of the water soluble dietary fiber include pectin, glucomannan, alginic acid, agarose, agaropectin, carrageenan, polydextrose, and the like. In this embodiment, dietary fiber consisting of a single component or a combination of multiple different types of dietary fiber can be comprised.

While purified dietary fiber can be used, a food product ingredient comprising dietary fiber can also be used in this embodiment. Grains, pulses, vegetables, fruits, and the like can be a source of dietary fiber, and Poaceae, Asteraceae, Lamiaceae, Brassicaceae, Theaceae, Amaranthaceae, Liliaceae, and Tiliaceae plants and vegetables are preferred. A single species of a plant or the like can be a source of dietary fiber, or a combination of multiple different plants or the like can be a source of dietary fiber.

Barley grass, which is young leaves of a Poaceae plant barley, contains a large amount of dietary fiber among vegetables. Barley grass, which is a typical raw material of a nutrient supplement product known as "aojiru" (green juice), is also a preferred source of dietary fiber in this embodiment.

When the aforementioned plant or the like is used in this embodiment, a food product ingredient processed while retaining the contained dietary fiber can also be used. Conventional and known methods can be used for such processing. For example, a method combining drying and milling can be used. Additionally, a step of sterilization can also be included. Each of the processing is not particularly limited, as long as it is a processing method that is commonly known to those skilled in the art.

In this embodiment, the content and content ratio of dietary fiber and calcium salt are not particularly limited, but can be appropriately determined while considering the degree of dietary fiber and calcium deficiency of a consumer.

In this embodiment, a food product refers to all food and beverages excluding pharmaceutical products and quasi drugs, but is not limited to food and beverages that are edible to humans. Feed used for the purpose of providing nutrients to livestock, poultry, and other animals is also included in the food product of this embodiment.

The food product of this embodiment can comprise only dietary fiber and calcium salt or comprise other components. Examples of other components include various excipients, binders, stabilizers, diluents, bulking agents, thickeners, emulsifiers, colorants, flavoring agents, additives, and the like. The content of other components can be appropriately selected depending on the usage mode of this embodiment or the like.

The form of the food product of this embodiment is not particularly limited. The food product can be in a powder, particulate, granular, tablet, liquid, paste, capsule, or tablet form. Powder, particulate, or granular form is preferred because storage or transport cost can be significantly reduced.

A food product with enhanced rate of absorbing calcium into the body while containing both calcium and dietary fiber can be provided by employing such a configuration. The present invention is further exemplified by the following calcium absorption test using rats, which is a non-limiting example.

### (Preparation of micronized calcium citrate)

200 parts of purified water was added to a reaction vessel, and 20 parts of calcined calcium obtained from scallop shells was gradually added to obtain a slurry of slaked lime. 7 parts of cyclodextrin (Ensuiko Sugar Refining Co., Ltd. "DEXIPEARL K-100") dissolved in 20 parts of purified water was added to the slurry of slaked lime in the reaction vessel and mixed by agitation. In another agitated reaction vessel, 45 parts of citric acid (Kenko Corporation) was gradually added to 100 part of purified water to obtain an aqueous citric acid solution. The aqueous citric acid solution was gradually dripped directly above an agitation impeller for violently agitating the slurry of slaked lime through an aqueous carboxylic acid solution injection tube. 0.25 parts of chondroitin sulfate (Yaegaki Bio-industry, Inc.) was added and mixed with the slurry, and then citric acid was added until the pH value was at a predetermined value of 5.6 to synthesize a slurry of calcium citrate.

After adding 80 parts of purified water to the slurry of calcium citrate, the mixture was subjected to a wet milling step for a very short period of time and spray dried with a spray drier (MicroPowtec Corporation "Century Dry Mill CDM10-550S") at an air pressure of 0.2 MPa and spray volume of 15 L/hour to obtain micronized calcium citrate (Ca content, 18.0%), which was used in the Examples.

### (Calcium salt used as subject of comparison)

Calcium carbonate (CaCO₃) is contained in natural materials such as shells, coral, and egg shells and is readily available at low cost, so that calcium carbonate is a calcium source that is often used in calcium supplements and the like. In the absorption test on micronized calcium citrate in the Examples, such calcium carbonate that is widely available commercially was used as a subject of comparison. Calcium carbonate (Ca content, 39.8%) of Wako Pure Chemical Industries, Ltd. was used in the Examples.

### (Dietary fiber used as test subject)

Dietary fiber from barley grass and cellulose was used as dietary fiber sources in the Examples. Dietary fiber content of the powdered cellulose (Wako Pure Chemical Industries, Ltd.) and barley grass powder used was 1000 mg/g and 366 mg/g, respectively.

### (Test animals)

As test animals in the calcium absorption test, 7 week old (as of the start of the test) SD male rats (CLEA Japan, Inc.) were used.

### (Feed)

48 rats were fed with modified AIN93G purified feed (blend composition: corn starch 39.7486%, casein 20%, gelatinized corn starch 13.2%, sucrose 10%, soybean oil 7%, calcium carbonate free AIN-93G mineral mixture 3.5%, AIN93 vitamin mixture 1%, L-cystine 0.3%, choline bitartrate 0.25%, and tertiary butylhydroquinone 0.0014%) excluding cellulose powder and calcium carbonate throughout the preliminary husbandry period and test period discussed below. The feed was fed by pair feeding in order to match the amount of feed intake in each test group. The rats were allowed to freely intake water.

### (Other husbandry conditions)

Each rat was raised in a plastic cage (Natsume Seisakusho Co., Ltd.), and body weight and amount of feed intake were measured every day. The temperature of the husbandry room was 24 ± 1 degrees, the humidity was 55 ± 5%, and the light-dark cycle was 12 hours (8:00 to 20:00).

### (Preliminary husbandry)

Each rat was adapted to the experimental environment by 7 days of preliminary husbandry and fed with the aforementioned feed, so that bioavailability of calcium and dietary fiber in each individual at the start of the test would be constant. The rats were grouped into 8 rats per group (n=8, total of 6 groups) as described below so that the mean body weight of each experimental group would be nearly equal at the end of the preliminary husbandry. To study the effect of the amount of barley grass fed, test groups fed with a baseline amount ("barley grass feeding group") and test groups fed with double the amount ("barley grass (double) feeding group") were provided.

Example 1 was the micronized calcium citrate and barley grass feeding group.

Example 2 was the micronized calcium citrate and barley grass (double) feeding group.

Example 3 was the micronized calcium citrate and cellulose feeding group.

Comparative Example 1 was the calcium carbonate and barley grass feeding group.

Comparative Example 2 was the calcium carbonate and barley grass (double) feeding group.

Comparative Example 3 was the calcium carbonate and cellulose feeding group.

### (Preparation of mixture of calcium salt and dietary fiber)

The target amount of dietary fiber intake for adult males (20 g/day) and recommended amount of calcium intake (800 mg/day) were converted by body weight to determine the amount of calcium and dietary fiber to be given to rats. Calcium and dietary fiber were added as described below to 40 mL of distilled water to prepare a mixture. The Ca concentrations for all of the mixtures were identical (1.33 mg/ml).

Micronized calcium citrate 295.6 mg and barley grass powder 3.97 g (Example 1), micronized calcium citrate 295.6 mg and barley grass powder 7.94 g (Example 2), micronized calcium citrate 295.6 mg and powdered cellulose 1.33 g (Example 3), calcium carbonate 133.6 mg and barley grass powder 3.97 g (Comparative Example 1), calcium carbonate 133.6 mg and barley grass powder 7.94 g (Comparative Example 2), and calcium carbonate 133.6 mg and powdered cellulose 1.33 g (Comparative Example 3).

### (Administration of mixture of calcium salt and dietary fiber)

A gastric feeding tube was used to forcefully administer 1 ml of the mixture of calcium and dietary fiber per 100g of rat body weight into the stomach every day from day 1 of the test period after the completion of preliminary husbandry and day 28 on the last day of the test period.

### (Stool collection)

A stool sample was collected for each individual over each of the three-day periods, i.e., before start of the test, or before the completion of preliminary husbandry (day -2 to day 0 of the test), day 12 to day 14 of the test ("intermediate stage of the test period"), and day 26 to day 28 of the test ("late stage of the test period").

### (Measurement of stool calcium concentration)

The collected stool was dried after removing the contained body hair. The stools from each 3 days, i.e., prior to starting the test, intermediate stage of the test period, and late stage of the test period, was combined respectively and the weight was measured. The stools were then ground using a mill to prepare an analysis sample, and the calcium concentration was measured by ICP spectrometry.

Specifically, the samples were weighed and incinerated at 500°C (10 hours), and dissolved with 20% hydrochloric acid (Wako Pure Chemical Industry, Ltd.), and then evaporated and dried. The resulting dry sample was heated for extraction in 20% hydrochloric acid and filtered (No. 5A filter paper). After making the volume constant with 1% hydrochloric acid, the calcium concentration was measured with an ICP spectrometer (Shimadzu Corporation "ICPE-9000").

### (Calculation of apparent calcium absorption rate)

The apparatus calcium absorption rate was calculated by the equation "apparent calcium absorption rate (%) - (apparent amount of calcium absorption/amount of calcium intake) x 100" from the amount of calcium intake and amount of calcium excretion in stool in each of the periods prior to starting the test, intermediate stage of the test period, and late stage of the test period. In this regard, "apparent amount of calcium absorption (mg/day) - amount of calcium intake - amount of calcium excretion in stool". The apparent calcium absorption rate is also referred to as "calcium absorption rate" simply.

### (Autopsy after completion of test)

After completion of 28 days of testing, each individual which has fasted for 16 hours was cut opened at the abdomen under anesthesia by Somunopentyl for visual observation.

### (Statistical processing)

The mean value and standard deviation of each test group were found based on the measurement values obtained from the test. If a significant difference was found by analysis of variance, a significance test was preformed among each group by Tukey test. The significance level of analysis of variance and Tukey test was 5% (p < 0.05).

### (Evaluation of body weight)

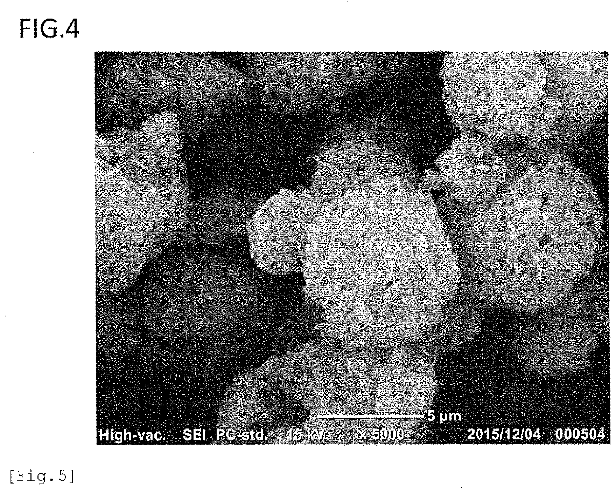

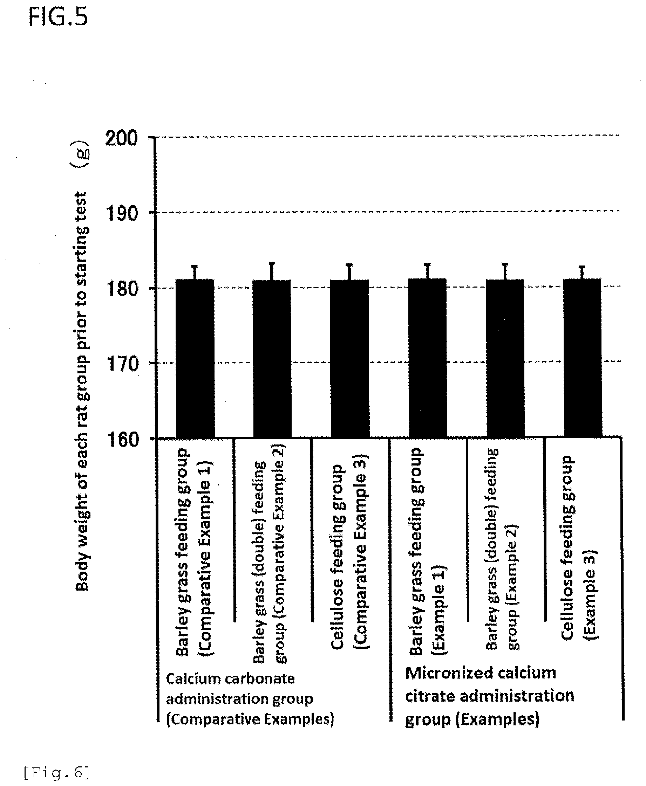

Figure **5** shows the body weight prior to starting the test, and Figure **6** shows the body weight after the completion of the test for each test group of rats used in a calcium absorption test. A significant difference was not found with respect to these items among each of the test groups.

### (Evaluation of increase in body weight and intake efficiency)

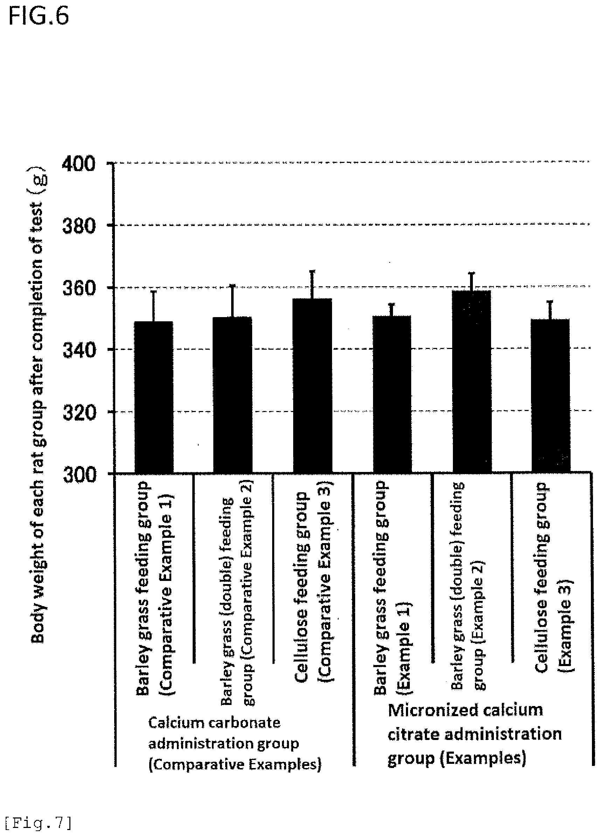

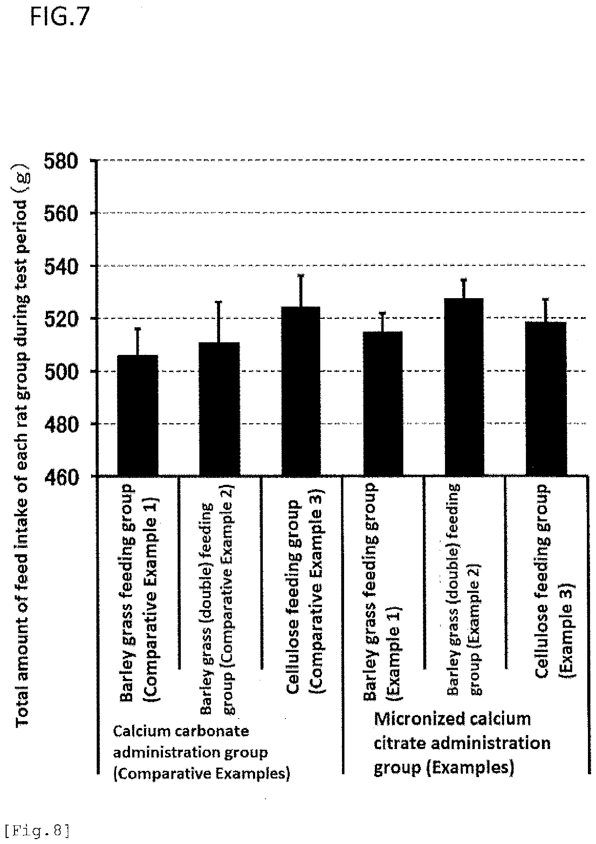

Figure **7** shows the total amount of feed intake of each test group during the test period and Figure **8** shows the feed efficiency calculated based on the total amount of feed intake and increase in body weight during the test period. A significant difference was also not found with respect to these items among each of the test groups.

### (Evaluation of calcium absorption rate)

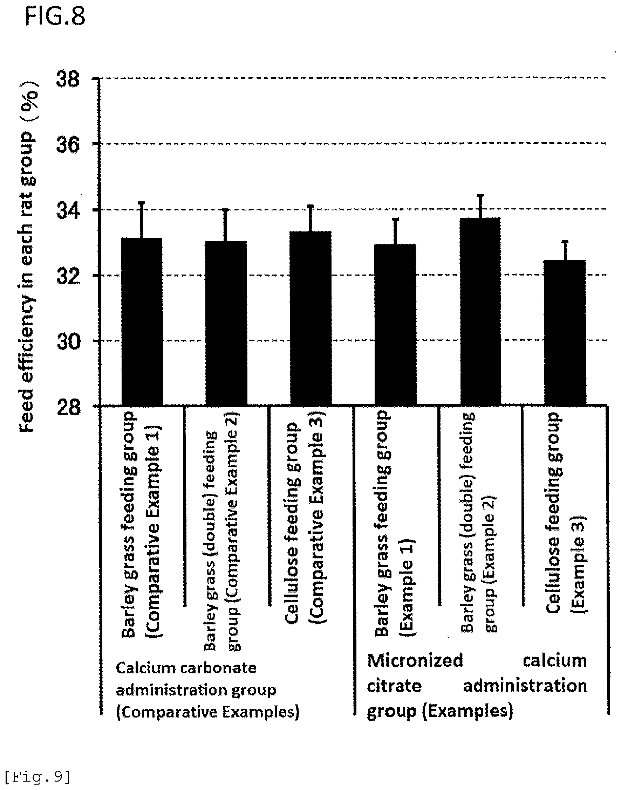

Figure **9** shows the calcium absorption rate of each test group calculated based on the amount of calcium excretion in the collected stool and amount of calcium intake prior to staring the test, i.e., during preliminary husbandry period. A significant difference was not found among each of the test groups. A significant difference was also not found among test groups in actual measurement values for both the amount of calcium excretion in stool and amount of calcium intake on which the calculation was based.

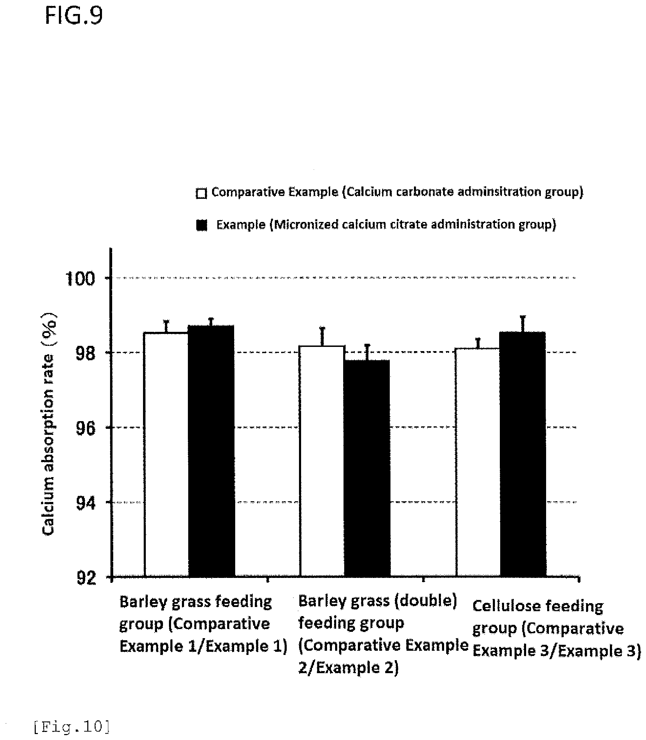

Figure **10** shows the calcium absorption rate of each test group in the late stage of the test period, which was calculated based on the amount of calcium intake and amount of calcium excretion in the collected stool. Examples 1 and 2, in which micronized calcium citrate was administered to a test group using barley grass as a dietary fiber source, both exhibited a statistically significantly higher calcium absorption rate compared to Comparative Examples 1 and 2 in which calcium carbonate was administered. A significant difference was not found in the amount of calcium intake, while a significant difference was found in the amount of calcium excretion in the stool in actual measurement values.

Although a significant difference was not found, Comparative Example 2, which is a test group administered with calcium carbonate and double amount of barley grass, was observed to have a lower calcium absorption rate compared to Comparative Example 1. In contrast, a tendency for the calcium absorption rate to change due to the difference in the amount of barley grass fed was not observed in the results of Examples 1 and 2 of micronized calcium citrate administration groups.

A statistically significant difference in the calcium absorption rates was not found between Example 3 and Comparative Example 3, which are test groups using cellulose as a dietary fiber source. However, Example 3 exhibited a higher calcium absorption rate compared to Comparative Example 3, and the same tendency as the results for test groups using barley grass as a dietary fiber source was observed.

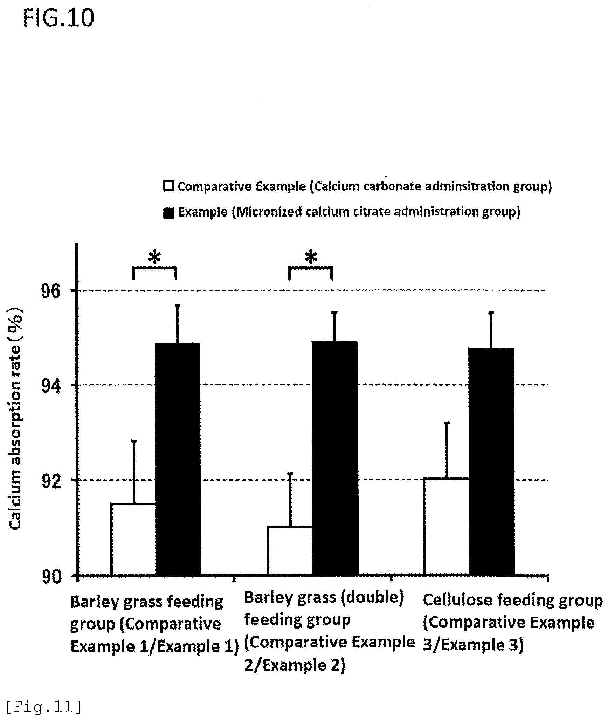

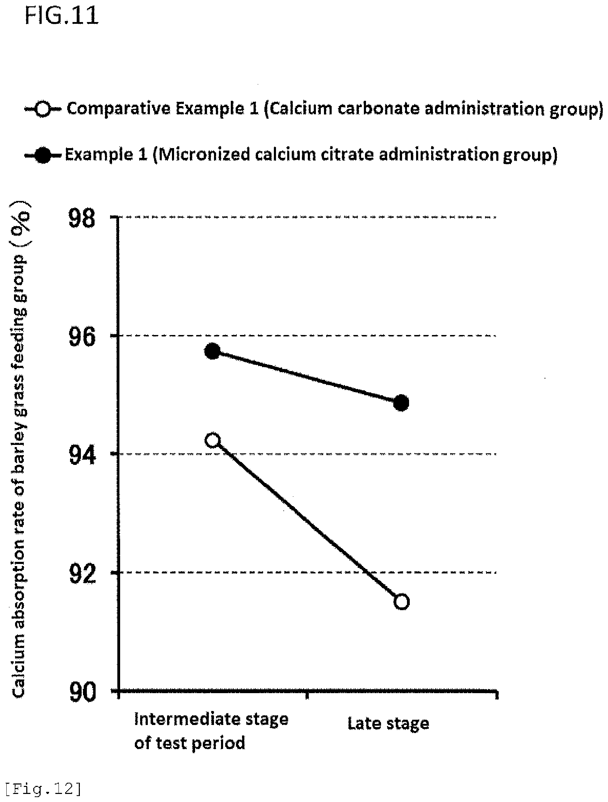

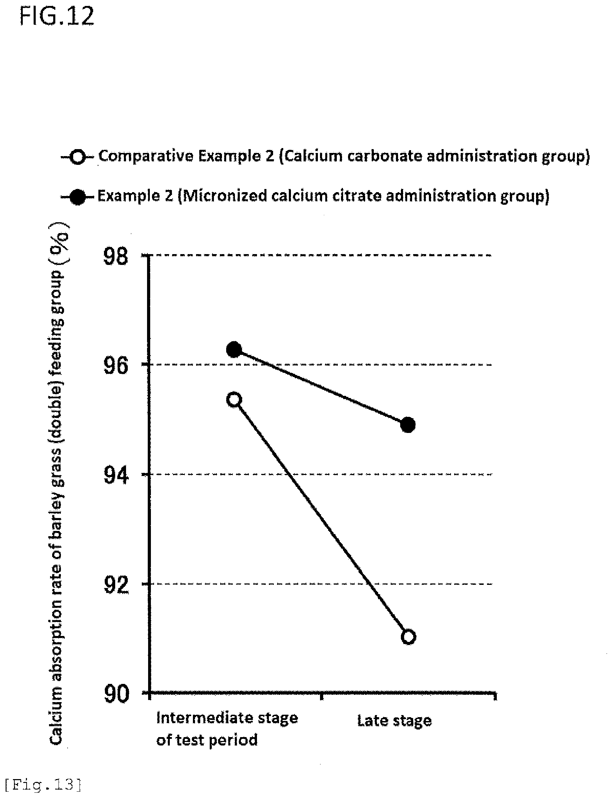

Figures **11****,** **12****,** and **13** show the amount of change in calcium absorption rate in the intermediate and late stages of the test period of a barley grass feeding group, barley grass (double) feeding group, and cellulose feeding group, respectively. A tendency for the calcium absorption rate to decrease from the intermediate to late stage of the test period was observed in each of the Examples and Comparative Examples. However, Examples 1 to 3 administered with micronized calcium citrate exhibited a tendency to maintain a higher calcium absorption rate compared to Comparative Examples 1 to 3 administered with calcium carbonate.

Unlike pharmaceutical products, nutrient supplements and the like are generally ingested over a long period. Thus, the results shown in Figures **11** to **13** suggest that this embodiment is superior in terms of calcium absorption efficiency into the body when dietary fiber and calcium are simultaneously ingested over medium to long periods.

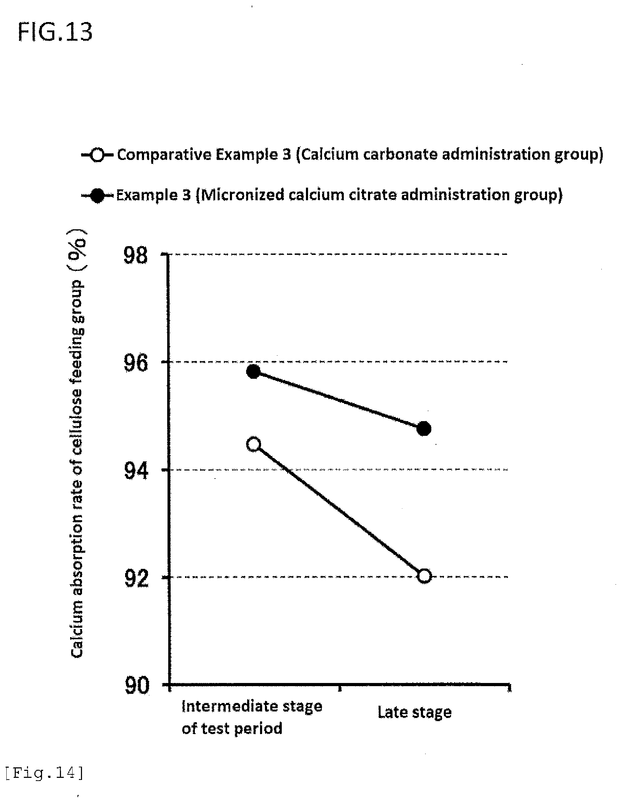

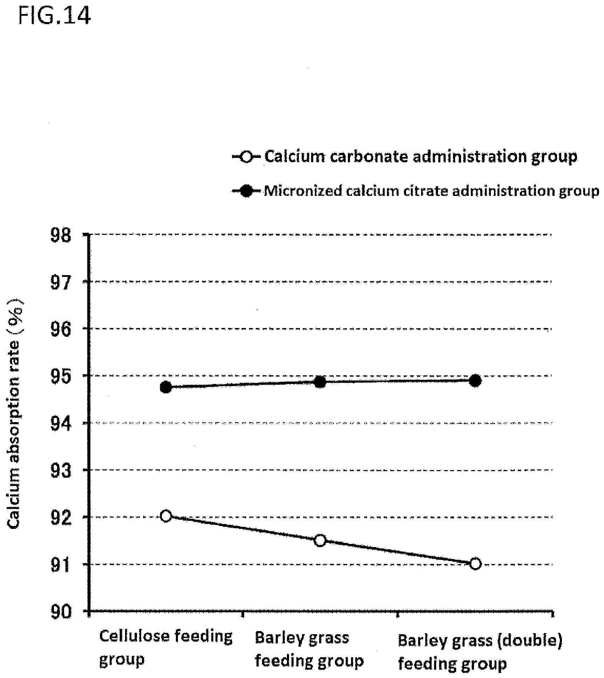

Figure **14** is a diagram plotting calcium absorption rates in the late stage of the test period in every Example and Comparative Example and connecting them with a line for each calcium administration group. When micronized calcium citrate is administered with dietary fiber, it is clear that the calcium absorption rate is significantly higher compared to administration of calcium carbonate. The calcium absorption rate shown in the micronized calcium citrate administration group exhibited a tendency to be less affected by the type and amount of dietary fiber compared to a calcium carbonate administration group.

### (Autopsy after completion of test)

An abnormality that can be visually recognized was not found in the chest or abdominal region of each individual in the autopsy after the completion of the test. An abnormality was also not found in the appendix, which tends to be affected by the ingestion conditions of dietary fiber. Therefore, a difference in calcium absorption rates found in the test results was not diagnosed to be due to an individual specific abnormality.

Micronized calcium citrate exhibited a high absorption rate into the body when simultaneously ingested with cellulose or barley grass in this Example, which used calcium carbonate for comparison. It was confirmed from the results of this Example that the food product of this embodiment comprising granules of calcium salt and dietary fiber can reduce the decrease in the calcium absorption rate. It was also confirmed that even if the intake of dietary fiber from barley grass is doubled, the high calcium absorption rate in this embodiment does not significantly decrease.

While the present invention has been explained using embodiments, the technical scope of the present invention is not limited to the scope described in the embodiments. It is apparent to those skilled in the art that various changes and modifications can be added to the embodiment. It is also apparent from the descriptions in the Claims that such changed or modified forms can be encompassed in the technical scope of the present invention, which is defined in the claims.

It should be noted that the order of executing each processing in the operation, procedure, step, or stage in the apparatus, system, program, and method shown in the Claims, specification, and drawings is not explicitly described as "before", "prior to", or the like, so that the processing can be materialized in any order, as long as an output of preceding processing is not used in a following processing. "First", "Next", and the like used for convenience to explain the operational flow in the Claims, specification, and drawings do not mean that the operation needs to be performed in this order.

### [Reference Signs List]

**100** Calcium citrate particles, **102** Primary particles, **104** secondary particles

## Claims

1. Use of a composition comprising granules of secondary particles in combination with a food product comprising dietary fiber, wherein the granules of said secondary particles comprise cyclodextrin and flat primary particles of calcium salt with a mean length of 2 µm or less in a planar direction, wherein the calcium salt comprises calcium citrate.

2. The use of claim 1, wherein the primary particles have been aggregated with the cyclodextrin to the granules of said secondary particles.

3. The use of claim 2, wherein the granules of said secondary particles have been formed by spray drying the primary particles.

4. The use of claim 2 or 3, wherein the granules of said secondary particles have a mean particle size of 50 µm or less.

5. The use of any one of claims 1 to 4, wherein the composition comprises chondroitin sulfate.

6. The use of any one of claims 1 to 5, wherein the dietary fiber in the food product comprises dietary fiber derived from a Poaceae, Asteraceae, Lamiaceae, Brassicaceae, Theaceae, Amaranthaceae, Liliaceae, or Tiliaceae plant.

7. The use of any one of claims 1 to 5, wherein the dietary fiber in the food product comprises dietary fiber derived from barley grass.

8. The use of any one of claims 1 to 7, wherein the composition is used in combination with aojiru.

9. The use of any one of claims 1 to 8, wherein said use comprises adding the composition comprising the granules of said secondary particles to a food product comprising the dietary fiber.

10. A food product comprising:
a composition comprising granules of secondary particles and dietary fiber, wherein the granules of secondary particles comprise cyclodextrin and flat primary particles of calcium salt with a mean length of 2 µm or less in a planar direction, and wherein the calcium salt comprises calcium citrate.

## Patentansprüche

1. Verwendung einer Zusammensetzung, die Körnchen aus Sekundärteilchen umfasst, in Kombination mit einem Lebensmittelprodukt, das Ballaststoffe umfasst, wobei die Körnchen der Sekundärteilchen Cyclodextrin und flache Primärteilchen aus Calciumsalz mit einer mittleren Länge von 2 µm oder weniger in einer planaren Richtung umfassen, und wobei das Calciumsalz Calciumcitrat umfasst.

2. Verwendung nach Anspruch 1, wobei die Primärteilchen mit dem Cyclodextrin zu den Körnern der Sekundärteilchen aggregiert wurden.

3. Verwendung nach Anspruch 2, wobei die Körnchen der Sekundärteilchen durch Sprühtrocknung der Primärteilchen gebildet wurden.

4. Verwendung nach Anspruch 2 oder 3, wobei die Körnchen der Sekundärteilchen eine mittlere Teilchengröße von 50 µm oder weniger aufweisen.

5. Verwendung nach einem der Ansprüche 1 bis 4, wobei die Zusammensetzung Chondroitinsulfat umfasst.

6. Verwendung nach einem der Ansprüche 1 bis 5, wobei die Ballaststoffe in dem Lebensmittelprodukt Ballaststoffe umfassen, die von einer Poaceae-, Asteraceae-, Lamiaceae-, Brassicaceae-, Theaceae-, Amaranthaceae-, Liliaceae- oder Tiliaceae-Pflanze stammen.

7. Verwendung nach einem der Ansprüche 1 bis 5, wobei die Ballaststoffe in dem Lebensmittelprodukt Ballaststoffe umfassen, die aus Gerstengras stammen.

8. Verwendung nach einem der Ansprüche 1 bis 7, wobei die Zusammensetzung in Kombination mit Aojiru verwendet wird.

9. Verwendung nach einem der Ansprüche 1 bis 8, wobei die Verwendung die Zugabe der Zusammensetzung, welche die Körnchen der Sekundärteilchen umfasst, zu einem Lebensmittelprodukt umfasst, das die Ballaststoffe umfasst.

10. Lebensmittel, das folgendes umfasst:
eine Zusammensetzung, die Körnchen aus Sekundärteilchen und Ballaststoffe umfasst, wobei die Körnchen der Sekundärteilchen Cyclodextrin und flache Primärteilchen aus Calciumsalz mit einer mittleren Länge von 2 µm oder weniger in einer planaren Richtung umfassen, und wobei das Calciumsalz Calciumcitrat umfasst.

## Revendications

1. Utilisation d'une composition comprenant des granules de particules secondaires en combinaison avec un produit alimentaire comprenant des fibres alimentaires, lesquels granules desdites particules secondaires comprennent une cyclodextrine et des particules primaires plates de sel de calcium présentant une longueur moyenne de 2 µm ou moins dans une direction planaire, lequel sel de calcium comprend du citrate de calcium.

2. Utilisation conforme à la revendication 1, pour laquelle les particules primaires ont été agrégées avec la cyclodextrine en les granules desdites particules secondaires.

3. Utilisation conforme à la revendication 2, pour laquelle les granules desdites particules secondaires ont été formés par séchage par pulvérisation des particules primaires.

4. Utilisation conforme à la revendication 2 ou 3, dans laquelle les granules desdites particules secondaires ont une taille moyenne de particule de 50 µm ou moins.

5. Utilisation conforme à l'une des revendications 1 à 4, dans laquelle la composition comprend du chondroïtine-sulfate.

6. Utilisation conforme à l'une des revendications 1 à 5, dans laquelle les fibres alimentaires présentes dans le produit alimentaire comprennent des fibres alimentaires dérivées d'un végétal poacée, astéracée, lamiacée, brassicacée, théacée, amaranthacée, liliacée ou tiliacée.

7. Utilisation conforme à l'une des revendications 1 à 5, dans laquelle les fibres alimentaires présentes dans le produit alimentaire comprennent des fibres alimentaires dérivées de pousses d'orge.

8. Utilisation conforme à l'une des revendications 1 à 7, dans laquelle la composition est utilisée en combinaison avec de l'aojiru.

9. Utilisation conforme à l'une des revendications 1 à 8, laquelle utilisation comporte le fait d'ajouter la composition comprenant les granules desdites particules secondaires à un produit alimentaire comprenant les fibres alimentaires.

10. Produit alimentaire comprenant :
une composition comprenant des granules de particules secondaires et des fibres alimentaires, lesquels granules de particules secondaires comprennent une cyclodextrine et des particules primaires plates de sel de calcium présentant une longueur moyenne de 2 µm ou moins dans une direction planaire, lequel sel de calcium comprend du citrate de calcium.
